# EUROPÄISCHE PATENTSCHRIFT

(11) **EP 3 722 082 B1**
(45) Veröffentlichungstag und Bekanntmachung des Hinweises auf die Patenterteilung: **10.06.2026**
(21) Anmeldenummer: 20167877.8
(22) Anmeldetag: 03.04.2020
(51) Int. Cl.: B29C 70/38, B29C 64/209

(54) **FASERLEGEKOPF, FASERLEGEANLAGE SOWIE VERFAHREN ZUM ABLEGEN VON FASERMATERIAL**
FIBRE LAYING HEAD, FIBRE LAYING INSTALLATION AND METHOD FOR DEPOSITING FIBROUS MATERIAL
TÊTE DE DÉPOSE DE FIBRES, INSTALLATION DE DÉPOSE DE FIBRES ET PROCÉDÉ DE DÉPÔT DE MATIÈRE FIBREUSE

(30) Priorität: 11.04.2019 DE 202019102097 U
(43) Veröffentlichungstag der Anmeldung: 14.10.2020
(73) Patentinhaber: Deutsches Zentrum für Luft- und Raumfahrt e.V., 51147 Köln (DE)
(72) Erfinder: KOLBE, Andreas, 22305 Hamburg (DE)
(74) Vertreter: Gramm, Lins & Partner Patent- und Rechtsanwälte PartGmbB

(56) Entgegenhaltungen:
- EP-A1- 2 324 994
- EP-A1- 2 433 785
- DE-A1- 102010 013 711

## Beschreibung

Die Erfindung betrifft einen Faserlegekopf zum Ablegen von Fasermaterial auf einem Werkzeug zur Herstellung eines Faserverbundbauteils. Die Erfindung betrifft ebenso eine Faserlegeanlage hierzu.

Ebenso von der Erfindung umfasst ist ein Verfahren zum Ablegen von Fasermaterial zur Herstellung eines Faserverbundbauteils.

Aufgrund der gewichtsspezifischen Festigkeit und Steifigkeit sind Faserverbundwerkstoffe bei der Herstellung von Bauteilen kaum mehr wegzudenken. Faserverbundwerkstoffe bestehen dabei hauptsächlich aus zwei wesentlichen Bestandteilen, nämlich einem Fasermaterial und einem Matrixmaterial. Bei der Herstellung von Faserverbundbauteilen aus einem Faserverbundwerkstoff wird dabei in der Regel das Fasermaterial in die entsprechende spätere Bauteilform gebracht und dann das in das Fasermaterial infundierte Matrixmaterial ausgehärtet. Das Aushärten geschieht in den allermeisten Fällen durch Temperatur- und ggf. Druckbeaufschlagung. Durch das Aushärten des Matrixmaterials werden die lasttragenden Fasern des Fasermaterials in ihre vorbestimmte Richtung gezwungen und bilden dabei zusammen mit dem ausgehärteten Matrixmaterial eine integrale Einheit.

Fasermaterialien eines Faserverbundwerkstoffes können dabei als trockene oder ggf. vorbebinderte Fasermaterialien bereit gestellt werden, die erst nach dem Eindringen des Fasermaterials in ein entsprechendes Werkzeug mit dem Matrixmaterial in einem Infusionsprozess infundiert werden. Hiervon unterscheiden sich die bereits vorimprägnierten Fasermaterialien (Prepregs), bei denen das Fasermaterial bereits mit dem entsprechenden Matrixmaterial imprägniert ist und so der Faserverbundwerkstoff bestehend aus Fasermaterial und Matrixmaterial in einer Einheit bereitgestellt wird.

Bei der Verarbeitung von Fasermaterialien zur Herstellung von Faserverbundbauteilen aus einem Faserverbundwerkstoff ist die Verarbeitungstemperatur des Fasermaterials sowie der an der Verarbeitung beteiligten Anlagenkomponenten ein wesentlicher Prozessparameter, der außerhalb seines Gültigkeitsbereiches dem gesamten Herstellungsprozess äußerst negativ beeinflussen kann und zu einem Bauteilausschuss beziehungsweise einem Stillstand des gesamten Prozesses führen könnte.

Dies ist insbesondere dann von besonderer Bedeutung, wenn das Fasermaterial mit Hilfe von Faserlegeanlagen automatisiert auf einem Werkzeug abgelegt werden soll. Eine solche automatisierte Faserlegeanlage ist beispielsweise aus der DE 10 2010 015 027 A1 bekannt, bei der um ein in der Mitte angeordnetes Formwerkzeug ein Schienensystem vorgesehen ist, auf dem Roboter beweglich um das Formwerkzeug herum geführt werden können. Die Roboter, in der Regel Sechsarmknickroboter, weisen als Endeffektor einen Faserlegekopf auf, dem kontinuierlich ein Fasermaterial aus einem Fasermagazin zugeführt wird, wobei mit Hilfe einer Applikationseinheit des Faserlegekopfes (beispielsweise eine Anpressrolle), dass dem Faserlegekopf zugeführte Fasermaterial auf das Werkzeug gedrückt und so das Fasermaterial auf das Werkzeug abgelegt wird.

Aus der DE 10 2013 107 103 A1 ist beispielsweise ein Faserlegekopf zum Legen von Faserhalbzeugen auf ein Formwerkzeug bekannt, wobei der Faserlegekopf mindestens eine elektrische Elektrode aufweist, an die eine elektrische Spannung anlegbar ist, wobei die Elektrode das zugeführte Faserhalbzeug elektrisch kontaktiert und mit mindestens einer mit dem Faserhalbzeug ebenfalls elektrisch kontaktierten Gegenelektrode derart zusammenwirkt, dass in einem durch die Kontaktierung der mindestens einen Elektrode definierten Abschnitt innerhalb des Faserhalbzeuges ein Stormfluss bewirkt wird, durch den das Fasermaterial in Art einer Widerstandsheizung erwärmt wird.

Das Temperieren von Fasermaterialien bei der automatisierten Faserablage ist gerade bei vorbebinderten Fasermaterialien sowie bei Prepreg-Materialien von besonderer Bedeutung, da im ersten Fall das Bindermaterial thermisch aktiviert wird und somit ein Anhaften des Fasermaterial an den meist senkrecht aufgestellten Formwerkzeugen begünstigt wird, während bei dem Prepreg-Materialien durch eine Temperierung der Fasermaterialien die Klebrigkeit aufgrund der Vorimprägnierung mit dem Matrixmaterial erhöht wird. Durch die benötigte Wärme zum Aufheizen oder aufschmelzen der Faserhalbzeuge (beispielsweise bebinderte Fasern, vorimprägnierte Fasern oder faserverstärkte thermoplastische Bänder), erfolgt auch eine Erwärmung der faserführenden Elemente innerhalb des Faserlegekopfes, was sich negativ auf den gesamten automatisierten Ablegeprozess auswirken kann. So erwärmen sich die in und an dem Kopf vorgesehenen Führungselemente aufgrund von Wärmestrahlung oder Wärmeleitung der Heizelemente oder durch den Kontakt mit dem zu fördernden Fasermaterial, wodurch die Führungselemente schnell die notwendigen Prozesstemperaturen erreichen können. Insbesondere bei Legeprozessen mit bebinderten Trockenfasern (160°C - 200°C) und bei der Ablage thermoplastischer Fasermaterialien (bis 500°C) erreichen die Führungselemente die Schmelztemperatur des Binders oder der thermoplastischen Matrix, was dazu führt, dass die Faser nicht aus dem Legekopf gefördert werden können und dieser verstopft. Denn die Anlagenkomponenten erwärmen sich ebenfalls, wodurch der Prozess schwieriger zu kontrollieren ist. Insbesondere bei dauerhafter Nutzung, wie beispielsweise der Fertigung großer Komponenten, kann dies zu Problemen im Fertigungsablauf führen. Wenn durch den dauerhaften Betrieb der Anlage und dem kontinuierlichen Fördern des Fasermaterials kann sich an den einzelnen Führungselementen ein Abrieb ablagern, der Aufgrund der vorhandenen Prozesstemperatur ein Aufschmelzen beziehungsweise aktivieren des Materials bewirkt und so den gesamten Prozess lahm legen kann.

Die EP 2 324 994 A1 offenbart den Oberbegriff des Anspruchs 1 und damit ein System zum Ablegen von Fasermaterial, wobei trockenes Fasermaterial durch eine Imprägniervorrichtung gezogen und mit Matrixmaterial imprägniert wird. Anschließend wird das Fasermaterial durch eine Kühlvorrichtung transportiert, von wo es aus zu einer Schneidvorrichtung und dann auf eine Ablegerolle am Formwerkzeug geführt wird.

Die DE 10 2010 013 711 A1 offenbart einen Faserlegekopf für einen Roboterarm, wobei der Faserlegekopf eine segmentierte Andruckrolle hat. Die Gefahr einer Anhaftung von Kunststoffmaterial bei der Ablage des Fasermaterials soll dabei durch eine temperaturfeste Elastomerbeschichtung der Andruckrolle verhindert werden. Mithilfe einer Vorandruckeinheit, die federnd gelagerte Laufräder hat, die auf die Segmente der Andruckrolle drücken, soll eine Federkraft auf die Andruckrolle zum Ausgleich von Unebenheiten ausgeübt werden.

Die EP 2 433 785 A1 offenbart schließlich einen Faserlegekopf, dem ein trockenes Fasermaterial zugeführt und während der Ablage auf ein Werkzeug mit einem Matrixmaterial imprägniert wird. Dabei ist in der Förderkette vor der Ablage durch eine Andruckrolle ein Kühlsystem vorgesehen, um das Kunststoffmaterial auf eine Prozesstemperatur herunter zu kühlen.

Es ist daher Aufgabe der vorliegenden Erfindung einen verbesserten Faserlegekopf beziehungsweise eine verbesserte Faserlegeanlage anzugeben, mit dem kontinuierlich insbesondere vorbebindertes beziehungsweise vorimprägniertes Fasermaterial auf ein Werkzeug abgelegt werden kann, ohne das der Faserlegekopf insbesondere an seiner Austrittsöffnung verstopft.

Die Aufgabe wird mit dem Faserlegekopf gemäß Schutzanspruch 1 erfindungsgemäß gelöst. Vorteilhafte Ausgestaltungen finden sich in den entsprechenden Unteransprüchen. Gemäß des Anspruchs 1 wird ein Faserlegekopf zum Ablegen von Fasermaterial auf einem Werkzeug vorgeschlagen, wobei der Faserlegekopf Gattungsgemäß eine Befestigungsaufnahme hat, die zum befestigen des Faserlegekopfes an einem Bewegungsautomaten als Endeffektor ausgebildet ist.

Des Weiteren weist der Faserlegekopf gattungsgemäß eine Faserzuführung auf, um dem Faserlegekopf ein quasiendloses Fasermaterial zuzuführen. Außerdem hat ein solcher Faserlegekopf zum Ablegen von quasiendlosem Fasermaterial eine Applikationseinheit, die zum Applizieren des dem Faserlegekopf zugeführten Faserlegematerials auf dem Werkzeug ausgebildet ist.

Das dem Faserlegekopf zugeführte quasiendlose Fasermaterial wird innerhalb des Faserlegekopfes in der Regel zu der Applikationseinheit geführt, sodass das quasiendlose Fasermaterial durch die Applikationseinheit auf dem Werkzeug abgelegt werden kann. Die Applikationseinheit ist dabei in der Regel eine Anpressrolle, die drehbar gelagert ist und kontinuierlich das Fasermaterial auf das Werkzeug drückt. Die Applikationseinheit kann aber auch ein Anpressschuh sein, der über die Formwerkzeugoberfläche gleitet und so das Fasermaterial auf das Werkzeug drückt. Ein solcher Faserlegekopf wird mittels der Befestigungsaufnahme an einem Bewegungsautomaten fest montiert, sodass der Faserlegekopf im Raum frei bewegbar ist.

Handelt es sich bei dem Bewegungsautomaten um einen Knickarmroboter, so kann der Faserlegekopf meist in allen translatorischen sowie rotatorischen Bewegungsrichtungen bewegt werden.

Erfindungsgemäß ist nun vorgesehen, dass der Faserlegekopf eine Führungseinrichtung mit mindestens einem Faserführungselement hat, dass im Bereich der Applikationseinheit derart angeordnet ist, dass das dem Faserlegekopf zugeführte Fasermaterial zwischen dem mindestens einem Faserführungselement und der Applikationseinheit zum Applizieren mittels der Applikationseinheit hindurchführbar ist, wobei das mindestens eine Führungselement ein Temperierelement hat, welches zum Temperieren des Faserführungselementes ausgebildet ist.

Erfindungsgemäß befindet sich im Bereich der Applikationseinheit, beispielsweise der Anpressrolle, wenigstens ein Faserführungselement, welches dazu vorgesehen ist, dass dem Faserlegekopf zugeführte Fasermaterial schlussendlich auf die Applikationseinheit, beispielsweise die Anpressrolle, zu führen, sodass das Fasermaterial formschlüssig an der Applikationseinheit anliegt und mit Hilfe der Applikationseinheit dann auf das Werkzeug gedrückt beziehungsweise abgelegt werden kann.

Erfindungsgemäß wird das Führungselement beziehungsweise die Führungselemente mit Hilfe eines Temperierelementes, welches an oder in dem Führungselement angeordnet ist, temperiert, umso dass Führungselement zu kühlen oder zu erwärmen (je nach Anwendungsfall). Werden beispielsweise Prepreg-Materialien verwendet und werden diese Prepreg-Materialien für eine bessere Verarbeitung innerhalb des Kopfes erwärmt, so kann dies zu einer sehr starken Erwärmung der Führungselemente führen, was dem gesamten Ablegungsprozess negativ beeinflussen kann. Durch das Temperieren der Führungselemente, in diesem Fall durch das Kühlen der Führungselemente mit Hilfe des Temperierelementes, kann überschüssige Wärme in oder an den Führungselementen abgeleitet werden, um so einen Prozessstillstand aufgrund ungewollter Überhitzung der Führungselemente zu verhindern.

Das Problem der Überhitzung der Führungselemente wird darüber hinaus durch das formschlüssige und kontinuierliche Führen der quasiendlosen Fasermaterialien verstärkt, wodurch beispielsweise ein versehentliches aktivieren thermisch aktivierbarer Materialien erfolgen könnte. Durch das gezielte Kühlen der Führungselemente kann dies verhindert werden.

Des Weiteren ist es denkbar, dass bei Faserlegeköpfen ohne zusätzliche Temperiereinrichtungen einen Wärmeeintrag in das quasiendlose Fasermaterial im Bereich der Führungselemente zu bewirken, um diese beispielsweise zu erwärmen.

Die Erfinder haben dabei erkannt, dass es möglich ist, durch das gezielte Temperieren der Führungselemente im Bereich der Applikationseinrichtung eines Faserlegekopfes überschüssige Wärme in diesem Bereich aus dem Prozess abzuleiten uns so eine Überhitzung zu vermeiden beziehungsweise gezielt eine Wärmeeintrag in das Fasermaterial zu realisieren, ohne dass hierdurch der Prozess insgesamt negativ beeinflusst wird. Vielmehr hat sich gezeigt, dass durch das Temperieren der Führungselemente der gesamte Ablegeprozess sicherer und stabiler durchführbar ist und die Anzahl der Unterbrechungen aufgrund von Prozessfehlern verringert werden kann.

Wie bereits angesprochen, kann es sich bei der Applikationseinheit um eine Anpressrolle oder einen Anpressschuh handeln.

In einer Ausführungsform weist das Temperierelement eine Kühleinrichtung zum Kühlen des Faserführungselementes auf oder ist mit einer solchen Kühleinrichtung verbindbar oder verbunden. Gemäß einer Ausführungsform kann das Temperierelement damit zum aktiven und oder passiven Kühlen des Faserführungselementes ausgebildet sein. Ein aktives Temperieren des Faserführungselementes erfolgt dabei beispielsweise mit Hilfe des durch das Faserführungselement durchströmenden Fluides, das den Wärmezustrom beziehungsweise den Wärmeabtransport als Trägermedium übernimmt. Denkbar ist aber auch eine passive Temperierung, bei der mit Hilfe von wärmeleitenden Elementen (heat pipes) Wärme in das Faserführungselement eingebracht beziehungsweise aus diesem abgeleitet werden kann.

Die Kühleinrichtung kann beispielsweise in das Faserführungselement integriert sein oder extern beispielsweise an dem Faserlegekopf angeordnet sein, wobei dann dass Temperierelement entsprechend mit der Kühleinrichtung verbunden ist.

In einer vorteilhaften Ausführungsform hat das Temperierelement eines Faserführungselementes eine oder mehrere Fluidkanäle innerhalb des Faserführungselementes, die mit einem Fluid zum Temperieren des Faserführungselementes durchströmbar sind. Hierzu wird das Faserführungselement beziehungsweise das Temperierelement des Faserelementes mit einer entsprechenden Kühleinrichtung verbunden, die einen Fluidzustrom bereitstellt, sowie einen Fluidabfluss, wobei je nach Anwendungsfall entweder ein Fluid zum Zwecke der Wärmeaufnahme (kühlen) oder zum Zwecke der Wärmeabgabe (erwärmen) den Fluidkanälen des Faserführungselementes zugeführt wird.

Gemäß einer Ausführungsform hierzu stehen der oder die Fluidkanäle eines Temperierelementes sowohl mit einem an den Faserführungselementen vorgesehen Fluideinlass als auch mit einem Fluidauslass kommunizierend in Verbindung, sodass ein Fluid zum Temperieren des Faserführungselementes von dem Fluideinlass durch den oder die Fluidkanäle zum Fluidauslass durchströmbar ist beziehungsweise durchströmen kann umso wärme des Faserführungselementes aufzunehmen oder Wärme an das Faserführungselement abzugeben.

Der Fluideinlass und der Fluidauslass stehen dabei mit einer entsprechenden Kühleinrichtung kommunizierend in Verbindung, die zum Temperieren mittels eines Temperiermediums (Fluid) ausgebildet ist. Vorzugsweise ist diese Kühleinrichtung am Faserlegekopf oder an dem Roboter beziehungsweise an dem Bewegungsautomaten angeordnet, wodurch die Kühleinrichtung Bestandteil des bewegenden Systems wird. Denkbar ist aber auch, dass die Kühleinrichtung lediglich Bestandteil einer Faserlegeanlage ist und nicht im bewegenden System des Roboters angeordnet ist.

Gemäß einer Ausführungsform hat die Führungseinrichtung eine Mehrzahl von Faserführungselementen, die jeweils ein Temperierelement aufweisen. Dies ist besonders dann vorteilhaft und lohnenswert, wenn dem Faserlegekopf parallel eine Mehrzahl einzelner Faserbänder eines quasiendlosen Fasermaterials zugeführt wird. Dabei kann vorgesehen sein, dass jedem einzelnen Faserband ein eigenes Faserführungselement zugeordnet ist, durch dass das jeweilige Faserband schließlich an die Applikationseinheit geführt wird.

In einer weiteren vorteilhaften Ausführungsform ist die Applikationseinheit eine segmentierte Anpressrolle, bei dem jedem Segment ein eigenes Faserführungselement zugeordnet ist. Jedes einzelne Segment ist dabei bevorzugter Weise radial beweglich auf einer Drehachse der Anpressrolle angeordnet, wobei ein, mehrere oder alle Faserfügungselemente derart schwenkbar an dem Faserlegekopf gelagert sind, dass die Faserführungselemente radial in die Richtung ihres jeweiligen Segmentes der Anpressrolle beweglich sind.

Durch die segmentierte Anpressrolle lassen sich auch bei unebenen Werkzeugformen beziehungsweise Bauteilgeometrien oder Bauteiloberflächen eine sichere Faserablage insbesondere bei einer Vielzahl von einzelnen Faserbändern erreichen, da die Anpressrolle sich mit ihren radial beweglichen Segmenten dem Untergrund anpasst. Durch die schwenkbare Lagerung der Faserführungselemente radial zu der Bewegung der Segmente der Anpressrolle kann für jedes Segment sichergestellt werden, dass das jeweilige Fasermaterial sicher an das Segment der segmentierten Anpressrolle geführt wird.

Es hat sich gezeigt, dass sich in Verbindung mit einer segmentierten Anpressrolle und den schwenkbar gelagerten Faserführungselementen durch das Temperieren der Faserführungselemente eine besonders hohe Ablegequalität erreicht werden kann.

Gemäß einer Ausführungsform erstrecken sich das oder die Faserführungselemente fingerförmig am Umfang einer Anpressrolle als Applikationseinheit der Abschnittsweise, um so das Fasermaterial sicher an die Applikationseinheit führen zu können.

Gemäß einer Ausführungsform ist an dem Faserlegekopf eine mindestens einen Temperatursensor umfassende Temperatursensorik vorgesehen, die zum Erfassen der Temperatur im Bereich der Applikationseinheit eingerichtet ist, wobei die Temeperatursensorik mit einer Steuerungseinheit verbunden ist, die zum Steuern der Temperierung eines Temperierelementes wenigstens eines Faserführungselementes in Abhängigkeit von der erfassten Temperatur eingerichtet ist.

Die Aufgabe wird im Übrigen auch mit einer Faserlegeanlage gemäß Anspruch 12 erfindungsgemäß gelöst, wobei die Faserlegeanlage zum Ablegen von Fasermaterial auf einem Werkzeug ausgebildet ist. Die Faserlegeanlage weist einen Bewegungsautomaten auf, an dessen einen kinematischen Ende als Endeffektor ein Faserlegekopf angeordnet ist. Die Faserlegeanlage weist des Weiteren eine Fasermagazin zum Aufbewahren des abzulegenden Fasermaterials und eine Faserführung zum transportieren des Fasermaterials vom Fasermagazin zum Faserlegekopf auf. Erfindungsgemäß weist die Faserlegeanlage dabei einen Faserlegekopf, wie vorstehend beschrieben auf.

Die Aufgabe wird im Übrigen auch mit dem Verfahren zum Ablegen von Fasermaterial auf ein Werkzeug mittels einer Faserlegeanlage gemäß Anspruch 13 erfindungsgemäß gelöst, wobei mittels der Faserlegeanlage ein Fasermaterial von einem Fasermagazin zu einem an einem Bewegungsautomaten angeordneten Faserlegekopf transportiert und dann auch dem Werkzeug mittels des Faserlegekopfes abgelegt wird. Erfindungsgemäß wird dabei während des Ablegens des Fasermaterials das Fasermaterial einer Applikationseinheit des Faserlegekopfes zugeführt, in deren Bereich mindestens ein Faserführungselement einer Führungseinrichtung des Faserlegekopfes derart angeordnet ist, dass das dem Faserlegekopf zugeführte Fasermaterial zwischen dem mindestens einem Faserführungselement und der Applikationseinheit zum Applizieren mittels der Applikationseinheit hindurchführbar ist, wobei das mindestens eine Faserführungselement während des Ablegens des Fasermaterials mittels eines an dem Faserführungselement vorgesehenen Temperierelementes temperiert wird.

Die Erfindung wird anhand der beigefügten Figuren beispielhaft erläutert.

Es zeigen:
- Figur 1 -: Schematische Darstellung einer Faserlegeanlage;
- Figur 2 -: Schematische Darstellung eines Faserführungselementes.

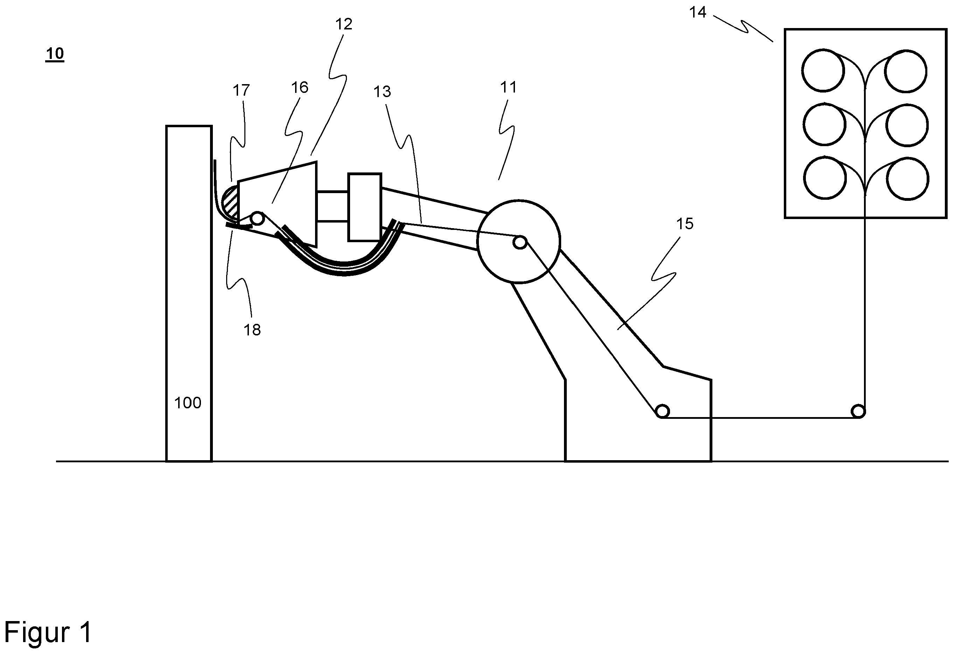

Figur 1 zeigt schematisch eine Faserlegeanlage 10, die einen Bewegungsautomaten 11 in Form eines Knickarmroboters hat. Als Endeffektor ist an dem Bewegungsautomaten 11 ein Faserlegekopf 12 angeordnet, um ein dem Faserlegekopf 12 zugeführtes Fasermaterial 13 auf einem Formwerkzeug 100 ablegen zu können. Das Fasermaterial 13 ist dabei in einem Faserspeicher 14 aufbewahrt, wobei mittels einer Faserführungseinrichtung 15 das Fasermaterial 13 von dem Faserspeicher beziehungsweise Fasermagazin 14 entlang der kinematischen Kette des Bewegungsautomaten 11 zum Faserlegekopf 12 geführt wird.

Innerhalb des Faserlegekopfes 12 kann das Fasermaterial 13 mit Hilfe einer Führungseinrichtung 16 zu einer Anpressrolle 17 geführt werden, sodass die Anpressrolle 17 das Fasermaterial 13 auf dem Formwerkzeug 100 andrückt und so ablegt.

Im Bereich der Anpressrolle 17 befinden sich ein oder mehrere Faserführungselemente 18, die im Bereich der Anpressrolle 17 so angeordnet sind, dass das Fasermaterial 13 zwischen der Anpressrolle 17 und den Faserführungselementen 18 so geführt wird, dass das Fasermaterial 13 auf die Anpressrolle 17 geführt wird.

Erfindungsgemäß sind die Faserführungselemente 18 dabei so ausgebildet, dass sie jeweils ein Temperierelement aufweisen, welches zum Temperieren des Faserführungselementes 18 ausgebildet ist.

Die Anpressrolle 17 kann dabei segmentiert sein, wobei jedem Segment der segmentierten Anpressrolle dabei jeweils ein Faserführungselement 18 zugeordnet ist. Die Faserführungselemente 18 sind dabei vorzugsweise an dem Faserlegekopf 12 so angeordnet, dass sie radial zu der Anpressrolle 17 schwenkbar ausgeführt sind, um so den notwenigen Führungsdruck beziehungsweise Führungskraft auf das Fasermaterial 13 ausüben zu können.

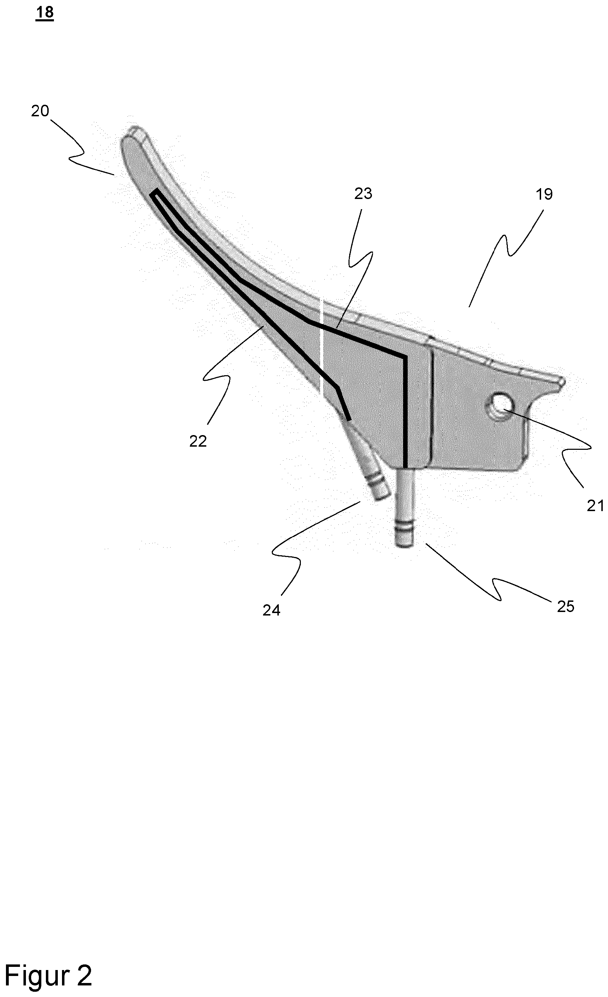

Figur 2 zeigt schematisch ein solches Faserführungselement 18 der Faserführungseinrichtung 16 des Faserlegekopfes 12, wie er aus Figur 1 bekannt ist.

Das Faserführungselement 18 hat hierbei einen Grundkörper 19, von dem sich aus leicht bogenförmig ein Fingerelement 20 erstreckt.

Der Radius des Bogens des Fingerelementes 20 entspricht dabei im Wesentlichen dem Radius der Anpressrolle 17. An dem Grundkörper 19 befindet sich eine Bohrung 21, um das Faserführungselement 18 schwenkbar an dem Faserlegekopf zu befestigen.

Das in Figur 2 gezeigte Faserführungselement 18 weist ein Temperierelement 22 auf, dass im Ausführungsbeispiel der Figur 2 in Form von Fluidkanälen 23 ausgebildet ist.

Der Fluidkanal 23 erstreckt sich dabei bis in das Fingerelement 20 hinein und mündet zum einen mit einem Fluideinlass 24 sowie andererseits mit einem Fluidauslass 25. Der Fluideinlass 24 sowie der Fluidauslass 25 werden dabei mit einer nicht dargestellten Temperiereinrichtung verbunden, sodass über den Fluideinlass 24 ein Fluid in die Fluidkanäle 23 eingeleitet werden kann, dass dann aus dem Fluidauslass 25 wieder zurück zu der Temperiereinrichtung strömt. Je nach Temperierung des beströmten Fluides kann dabei das Fingerelement 20 des Faserführungselementes 18 gekühlt oder erwärmt werden, es hat sich darüber hinaus gezeigt, dass die Faserführungselemente 18 mittels 3D-Druck beispielsweise aus Edelstahl gefertigt werden können, einschließlich der in den Faserführungselementen enthaltenen Fluidkanäle 23. Insbesondere aufgrund der geringen Baugröße von ca. 60 mm x 50 mm x 6 mm (Länge x Höhe x Breite) können diese Faserführungselemente 18 nicht mit spanenden Verfahren zu verhältnismäßigen Kosten gefertigt werden. Der Fluideinlass sowie der Fluidauslass können in Form von Schnellverbindern beziehungsweise Steckverbindungen ausgeführt sein.

### Bezugszeichenliste:

- 10 -: Faserlegeanlage
- 11 -: Bewegungsautomat
- 12 -: Faserlegekopf
- 13 -: Fasermaterial
- 14 -: Faserspeicher/Fasermagazin
- 15 -: Faserführungseinrichtung des Bewegungsautomaten
- 16 -: Führungseinrichtung des Faserlegekopfes
- 17 -: Anpressrolle
- 18 -: Faserführungselement
- 19 -: Grundkörper
- 20 -: Fingerelement
- 21 -: Bohrung
- 22 -: Temperierelement
- 23 -: Fluidkanäle
- 24 -: Fluideinlass
- 25 -: Fluidauslass

## Patentansprüche

1. Faserlegekopf (12) zum Ablegen von Fasermaterial (13) auf einem Werkzeug, mit
- einer Befestigungsaufnahme, die zum Befestigen des Faserlegekopfes (12) an einem Bewegungsautomaten (11) als Endeffektor ausgebildet ist,
- einer Faserzuführung zum Zuführen eines quasiendlosen Fasermaterials (13) zu dem Faserlegekopf (12), und
- einer Applikationseinheit (17), die zum Applizieren des dem Faserlegekopf (12) zugeführten Fasermaterials (13) auf das Werkzeug ausgebildet ist,
**dadurch gekennzeichnet, dass**
- der Faserlegekopf (12) eine Führungseinrichtung (16) mit mindestens einem Faserführungselement (18) hat, das im Bereich der Applikationseinheit (17) derart angeordnet ist, dass das dem Faserlegekopf (12) zugeführte Fasermaterial (13) auf die Applikationseinheit geführt wird und zwischen dem mindestens einen Faserführungselement (18) und der Applikationseinheit (17) zum Applizieren mittels der Applikationseinheit (17) hindurchführbar ist,
- wobei das mindestens eine Faserführungselement (18) ein Temperierelement (22) hat, welches zum Temperieren des Faserführungselementes (18) ausgebildet ist.

2. Faserlegekopf (12) nach Anspruch 1, **dadurch gekennzeichnet, dass** die Applikationseinheit (17) eine Anpressrolle (7) oder ein Anpressschuh ist.

3. Faserlegekopf (12) nach Anspruch 1 oder 2, **dadurch gekennzeichnet, dass** das Temperierelement (22) eine Kühleinrichtung zum Kühlen des Faserführungselementes (18) hat oder mit einer solchen Kühleinrichtung verbindbar oder verbunden ist.

4. Faserlegekopf (12) nach einem der vorhergehenden Ansprüche, **dadurch gekennzeichnet, dass** das Temperierelement (22) zum aktiven und/oder passiven Kühlen des Faserführungselementes (18) ausgebildet ist.

5. Faserlegekopf (12) nach einem der vorhergehenden Ansprüche, **dadurch gekennzeichnet, dass** das Temperierelement (22) ein oder mehrere Fluidkanäle (23) innerhalb des Faserführungselementes (18) hat, die mit einem Fluid zum Temperieren des Faserführungselementes (18) durchströmbar sind.

6. Faserlegekopf (12) nach Anspruch 5, **dadurch gekennzeichnet, dass** der oder die Fluidkanäle (23) eines Temperierelement (22) es sowohl mit einem an dem Faserführungselement (18) vorgesehenen Fluideinlass (24) als auch mit einem Fluidauslass (25) kommunizierend in Verbindung stehen, so dass ein Fluid zum Temperieren des Faserführungselementes (18) von dem Fluideinlass (24) durch den oder die Fluidkanäle (23) zum Fluidauslass (25) durchströmbar ist.

7. Faserlegekopf (12) nach einem der vorhergehenden Ansprüche, **dadurch gekennzeichnet, dass** die Führungseinrichtung (16) eine Mehrzahl von Faserführungselementen (18) hat, die jeweils ein Temperierelement (22) aufweisen.

8. Faserlegekopf (12) nach Anspruch 7, **dadurch gekennzeichnet, dass** die Applikationseinheit (17) eine segmentierte Anpressrolle (7) ist, bei der jedem Segment ein eigenes Faserführungselement (18) zugeordnet ist.

9. Faserlegekopf (12) nach Anspruch 8, **dadurch gekennzeichnet, dass** jedes Segment der segmentierten Anpressrolle (7) radial beweglich auf einer Drehachse der Anpressrolle (7) angeordnet ist, wobei ein, mehrere oder alle Faserführungselemente (18) derart schwenkbar an dem Faserlegekopf (12) gelagert sind, dass die Faserführungselemente (18) radial in Richtung ihres jeweiligen Segmentes der Anpressrolle (17) beweglich sind.

10. Faserlegekopf (12) nach einem der vorhergehenden Ansprüche, **dadurch gekennzeichnet, dass** sich das oder die Faserführungselemente (18) fingerförmig am Umfang einer Anpressrolle (17) als Applikationseinheit (17) abschnittsweise erstrecken.

11. Faserlegekopf (12) nach einem der vorhergehenden Ansprüche, **dadurch gekennzeichnet, dass** an dem Faserlegekopf (12) eine mindestens einen Temperatursensor umfassende Temperatursensorik vorgesehen ist, die zum Erfassen der Temperatur im Bereich der Applikationseinheit (17) eingerichtet ist, wobei die Temperatursensorik mit einer Steuerungseinheit verbunden ist, die zum Steuern der Temperierung eines Temperierelement (22) es wenigstens eines Faserführungselementes (18) in Abhängigkeit von der erfassten Temperatur eingerichtet ist.

12. Faserlegeanlage (10) zum Ablegen von Fasermaterial (13) auf ein Werkzeug mit einem Bewegungsautomaten (11), an dessen einem kinematischen Ende als Endeffektor ein Faserlegekopf (12) angeordnet ist, mit einem Fasermagazin (14) zum Aufbewahren des abzulegenden Fasermaterials (13) und einer Faserführung zum Transportieren des Fasermaterials (13) vom Fasermagazin (14) zum Faserlegekopf (12), **dadurch gekennzeichnet, dass** der Faserlegekopf (12) ein Faserlegekopf (12) nach einem der Ansprüche 1 bis 10 ist.

13. Verfahren zum Ablegen von Fasermaterial (13) auf ein Werkzeug mittels einer Faserlegeanlage (10), mittels derer ein Fasermaterial (13) von einem Fasermagazin (14) zu einem an einem Bewegungsautomaten (11) angeordneten Faserlegekopf (12) transportiert und dann auf dem Werkzeug abgelegt wird, **dadurch gekennzeichnet, dass** während des Ablegens des Fasermaterials (13) das Fasermaterial (13) einer Applikationseinheit (17) des Faserlegekopfes (12) zugeführt wird, in deren Bereich mindestens ein Faserführungselement (18) einer Führungseinrichtung des Faserlegekopfes (16) derart angeordnet ist, dass das dem Faserlegekopf (12) zugeführte Fasermaterial (13) auf die Applikationseinheit geführt wird und zwischen dem mindestens einen Faserführungselement (18) und der Applikationseinheit (17) zum Applizieren mittels der Applikationseinheit (17) hindurchgeführt wird, wobei das mindestens eine Faserführungselement (18) während des Ablegens des Fasermaterials (13) mittels eines in dem Faserführungselement (18) vorgesehenen Temperierelement (22) es temperiert wird.

14. Verfahren nach Anspruch 13, **dadurch gekennzeichnet, dass** zum Ablegen des Fasermaterials (13) eine Faserlegeanlage (10) gemäß Anspruch 12 verwendet wird.

## Claims

1. Fiber laying head (12) for depositing fiber material (13) onto a tool, comprising
- a mounting receptacle configured to mount the fiber laying head (12) on a robotic system (11) as an end effector,
- a fiber feed for feeding a quasi-continuous fiber material (13) to the fiber laying head (12), and
- an application unit (17) configured to apply the fiber material (13) supplied to the fiber laying head (12) onto the tool,
**characterized in that**
- the fiber laying head (12) has a guide device (16) with at least one fiber guide element (18) arranged in the region of the application unit (17) such that the fiber material (13) supplied to the fiber laying head (12) is guided onto the application unit and can be passed between the at least one fiber guide element (18) and the application unit (17) for application by means of the application unit (17),
- wherein the at least one fiber guide element (18) has a temperature control element (22) configured to temper the fiber guide element (18).

2. Fiber laying head (12) according to claim 1, **characterized in that** the application unit (17) is a pressure roller (7) or a pressure shoe.

3. Fiber laying head (12) according to claim 1 or 2, **characterized in that** the temperature control element (22) has a cooling device for cooling the fiber guide element (18) or is connectable to or connected to such a cooling device.

4. Fiber laying head (12) according to one of the preceding claims, **characterized in that** the temperature control element (22) is designed for active and/or passive cooling of the fiber guide element (18).

5. Fiber laying head (12) according to one of the preceding claims, **characterized in that** the temperature control element (22) has one or more fluid channels (23) within the fiber guide element (18) through which a fluid for tempering the fiber guide element (18) can flow.

6. Fiber laying head (12) according to claim 5, **characterized in that** the fluid channel(s) (23) of a temperature control element (22) are in communication with both a fluid inlet (24) provided on the fiber guide element (18) and a fluid outlet (25), so that a fluid for tempering the fiber guide element (18) can flow from the fluid inlet (24) through the fluid channel(s) (23) to the fluid outlet (25).

7. Fiber laying head (12) according to one of the preceding claims, **characterized in that** the guide device (16) has a plurality of fiber guide elements (18), each of which comprises a temperature control element (22).

8. Fiber laying head (12) according to claim 7, **characterized in that** the application unit (17) is a segmented pressure roller (7) in which each segment is assigned its own fiber guide element (18).

9. Fiber laying head (12) according to claim 8, **characterized in that** each segment of the segmented pressure roller (7) is arranged to be radially movable on a axis of rotation of the pressure roller (7), wherein one, several, or all fiber guide elements (18) are pivotally mounted on the fiber laying head (12) such that the fiber guide elements (18) are radially movable toward their respective segment of the pressure roller (17).

10. Fiber laying head (12) according to one of the preceding claims, **characterized in that** the fiber guide element(s) (18) extend in a finger-like manner in sections along the circumference of a pressure roller (17) as an application unit (17).

11. Fiber laying head (12) according to one of the preceding claims, **characterized in that** a temperature sensor system comprising at least one temperature sensor is provided on the fiber laying head (12), which is configured to detect the temperature in the region of the application unit (17), wherein the temperature sensor system is connected to a control unit that is configured to control the temperature of a temperature control element (22) of at least one fiber guide element (18) in dependence on the detected temperature.

12. Fiber laying system (10) for laying fiber material (13) onto a tool, comprising a motion control unit (11), at one kinematic end of which a fiber laying head (12) is arranged as an end effector, comprising a fiber magazine (14) for storing the fiber material (13) to be laid and a fiber guide for transporting the fiber material (13) from the fiber magazine (14) to the fiber laying head (12), **characterized in that** the fiber laying head (12) is a fiber laying head (12) according to one of claims 1 to 10.

13. A method for depositing fiber material (13) onto a tool using a fiber-laying system (10), by means of which fiber material (13) is transported from a fiber magazine (14) to a fiber laying head (12) arranged on a robotic system (11) and then deposited onto the tool, **characterized in that,** during the deposition of the fiber material (13), the fiber material (13) is fed to an application unit (17) of the fiber-laying head (12), in the region of which at least one fiber guide element (18) of a guiding device of the fiber laying head (16) is arranged such that the fiber material (13) supplied to the fiber laying head (12) is guided onto the application unit and is passed between the at least one fiber guide element (18) and the application unit (17) for application by means of the application unit (17), wherein the at least one fiber guide element (18) is tempered during the deposition of the fiber material (13) by means of a temperature control element (22) provided in the fiber guide element (18).

14. A method according to claim 13, **characterized in that** a fiber laying system (10) according to claim 12 is used for depositing the fiber material (13).

## Revendications

1. Tête de pose de fibres (12) destinée à déposer un matériau fibreux (13) sur un outil, comprenant
- un logement de fixation conçu pour fixer la tête de pose de fibres (12) à un automate de mouvement (11) en tant qu'effecteur terminal,
- un dispositif d'alimentation en fibres destiné à acheminer un matériau fibreux (13) quasi sans fin vers la tête de pose de fibres (12), et
- une unité d'application (17) conçue pour appliquer le matériau fibreux (13), acheminé vers la tête de pose de fibres (12), sur l'outil,
**caractérisée en ce que**
- la tête de pose de fibres (12) comporte un dispositif de guidage (16) comprenant au moins un élément de guidage de fibres (18) qui est disposé au niveau de l'unité d'application (17) de telle sorte que le matériau fibreux (13) acheminé vers la tête de pose de fibres (12) soit guidé sur l'unité d'application et puisse passer entre ledit au moins un élément de guidage de fibres (18) et l'unité d'application (17) pour être appliqué au moyen de l'unité d'application (17),
- ledit au moins un élément de guidage de fibres (18) comporte un élément de régulation de température (22) conçu pour régulier la température de l'élément de guidage de fibres (18).

2. Tête de pose de fibres (12) selon la revendication 1,
**caractérisée en ce que** l'unité d'application (17) est un rouleau presseur (7) ou un sabot presseur.

3. Tête de pose de fibres (12) selon la revendication 1 ou 2,
**caractérisée en ce que** l'élément de régulation de température (22) comporte un dispositif de refroidissement, destiné à refroidir l'élément de guidage de fibres (18), ou est relié ou peut être relié à un tel dispositif de refroidissement.

4. Tête de pose de fibres (12) selon l'une des revendications précédentes, **caractérisée en ce que** l'élément de régulation de température (22) est conçu pour le refroidissement actif et/ou passif de l'élément de guidage de fibres (18).

5. Tête de pose de fibres (12) selon l'une des revendications précédentes, **caractérisée en ce que** l'élément de régulation de température (22) comporte un ou plusieurs canaux de fluide (23) à l'intérieur de l'élément de guidage de fibres (18), dans lesquels peut circuler un fluide destiné à réguler la température de l'élément de guidage de fibres (18).

6. Tête de pose de fibres (12) selon la revendication 5,
**caractérisée en ce que** le ou les canaux de fluide (23) d'un élément de régulation de température (22) communiquent à la fois avec une entrée de fluide (24), prévue sur l'élément de guidage de fibres (18), et avec une sortie de fluide (25), de sorte qu'un fluide destiné à régulier la température de l'élément de guidage de fibres (18) peut circuler depuis l'entrée de fluide (24) à travers le ou les canaux de fluide (23) jusqu'à la sortie de fluide (25).

7. Tête de pose de fibres (12) selon l'une des revendications précédentes, **caractérisée en ce que** le dispositif de guidage (16) comporte une pluralité d'éléments de guidage de fibres (18) qui présentent chacun un élément de régulation de température (22).

8. Tête de pose de fibres (12) selon la revendication 7,
**caractérisée en ce que** l'unité d'application (17) est un rouleau presseur segmenté (7) dans lequel un élément de guidage de fibres (18) propre est associé à chaque segment.

9. Tête de pose de fibres (12) selon la revendication 8,
**caractérisée en ce que** chaque segment du rouleau presseur segmenté (7) est disposé de manière mobile radialement sur un axe de rotation du rouleau presseur (7), un, plusieurs ou tous les éléments de guidage de fibres (18) étant montés de manière pivotante sur la tête de pose de fibres (12) de telle sorte que les éléments de guidage de fibres (18) soient mobiles radialement en direction de leur segment respectif du rouleau presseur (17).

10. Tête de pose de fibres (12) selon l'une des revendications précédentes, **caractérisée en ce que** le ou les éléments de guidage de fibres (18) s'étendent localement en forme de doigts sur la périphérie d'un rouleau presseur (17) en tant qu'unité d'application (17).

11. Tête de pose de fibres (12) selon l'une des revendications précédentes, **caractérisée en ce que** sur la tête de pose de fibres (12) est prévu un système de capteur de température qui comprend au moins un capteur de température et qui est conçu pour détecter la température au niveau de l'unité d'application (17), le système de capteur de température étant relié à une unité de commande qui est conçue pour commander la régulation de température d'un élément de régulation de température (22) d'au moins un élément de guidage de fibres (18) en fonction de la température détectée.

12. Installation de pose de fibres (10) destinée à déposer un matériau fibreux (13) sur un outil, comprenant un automate de mouvement (11) dont une des extrémités cinématiques comprend, en tant qu'effecteur terminal, une tête de pose de fibres (12), comprenant un magasin de fibres (14) destiné à stocker le matériau fibreux (13) à déposer, et un guide-fibres destiné à transporter le matériau fibreux (13) du magasin de fibres (14) vers la tête de pose de fibres (12),
**caractérisée en ce que** la tête de pose de fibres (12) est une tête de pose de fibres (12) selon l'une des revendications 1 à 10.

13. Procédé pour déposer un matériau fibreux (13) sur un outil à l'aide d'une installation de pose de fibres (10), au moyen de laquelle un matériau fibreux (13) est transporté d'un magasin de fibres (14) vers une tête de pose de fibres (12) disposée sur un automate de mouvement (11), puis est déposé sur l'outil,
**caractérisé en ce que**, pendant la pose du matériau fibreux (13), le matériau fibreux (13) est acheminé vers une unité d'application (17) de la tête de pose de fibres (12), au niveau de laquelle au moins un élément de guidage de fibres (18) d'un dispositif de guidage de la tête de pose de fibres (16) est disposé de telle sorte que le matériau fibreux (13) acheminé vers la tête de pose de fibres (12) soit guidé sur l'unité d'application et puisse passer entre ledit au moins un élément de guidage de fibres (18) et l'unité d'application (17) pour être appliqué au moyen de l'unité d'application (17), ledit au moins un élément de guidage de fibres (18) étant régulé en température, pendant la dépose du matériau fibreux (13), au moyen d'un élément de régulation de température (22) prévu dans l'élément de guidage de fibres (18).

14. Procédé selon la revendication 13,
**caractérisé en ce qu'**une installation de pose de fibres (10) selon la revendication 12 est utilisée pour déposer le matériau fibreux (13).
